# FASCICULE DE BREVET EUROPEEN

(11) **EP 0 356 877 B1**
(45) Date de publication et mention de la délivrance du brevet: **17.03.1993**
(21) Numéro de dépôt: 89115436.1
(22) Date de dépôt: 22.08.1989
(51) Int. Cl.: G01M 3/20

(54) **Procédé de contrôle d'étanchéité d'un récipient de test avec un gaz traceur**
Verfahren zur Kontrolle der Dichte eines Testbehälters unter Verwendung eines Spürgases
Process for controlling the tightness of a test container using a tracer gas

(30) Priorité: 23.08.1988 DE 3828588
(43) Date de publication de la demande: 07.03.1990
(73) Titulaire: ALCATEL CIT, 75008 Paris (FR)
(72) Inventeur: Bürger, Heinz Dieter, D-6980 Wertheim (DE)
(74) Mandataire: Weinmiller, Jürgen

(56) Documents cités:
- US-A- 3 691 820

## Description

L'invention s'applique à un procédé de contrôle d'étanchéité d'un composant, en particulier d'un récipient de test, dans lequel un gaz traceur est envoyé sur la surface du composant tandis que l'espace situé de l'autre côté de cette surface est mis sous vide et relié à un détecteur de fuite à gaz traceur.
Le brevet français 2 606 509 décrit par exemple un détecteur de fuite à hélium.
De tels procédés, dans lesquels l'hélium en particulier est utilisé en tant que gaz traceur, sont largement répandus en pratique. En utilisant une pompe moléculaire pour l'évacuation de l'intérieur du récipient et un spectromètre de masse pour détecter la présence des atomes d'hélium, des faibles taux de fuites peuvent être détectés de façon sûre. Avec la diminution des taux de fuites, qui s'accompagne d'une sensibilité croissante des organes de détection, la mesure est faussée par des atomes d'hélium, qui ne proviennent pas d'une fuite mais d'une pollution préalable du récipient ou du spectromètre, produisant un "bruit de fond". A cause de la configuration stable et symétrique des électrons, l'hélium ne se dépose guère sur les surfaces métalliques, mais il pénètre par diffusion dans les matériaux organiques, comme par exemple les joints d'étanchéité, et n'en peut être enlevé que difficilement. Il s'ensuit que pour un composant à contrôler mis sous vide à partir de la pression atmosphérique, le bruit de fond d'hélium ne décroît que lentement. Il en résulte soit des durées de pompage très longues, qui sont incompatibles avec des cadences d'une fabrication industrielle, soit la nécessité d'avoir des ensembles de pompes surdimensionnée, qui pèsent lourdement sur les frais.

On pourrait penser à rincer, avant la mesure proprement dite, le récipient à contrôler et l'appareillage de mesure avec un gaz neutre comme par exemple de l'azote, mais souvent un tel gaz contient le même taux d'atomes d'hélium que celui qui existe dans l'air atmosphérique normal, ce qui fait que des taux de fuites extrêmement bas ne peuvent pas être détectés, même après un tel rinçage.
L'invention a pour but d'améliorer un procédé de contrôle tel que mentionné ci-dessus de telle façon que, sans utiliser de pompes surdimensionnées, le bruit de fond d'hélium, qui est un facteur gênant pour la détection de taux de fuites très bas, peut être réduit en peu de temps.

Ce but est atteint, selon l'invention, d'une part en reliant temporairement ledit espace situé du côté opposé à la surface du composant contre laquelle est envoyé le gaz traceur, à un réservoir d'eau, avant le contrôle d'étanchéité proprement dit, ce réservoir contenant une eau dépourvue de gaz dissous et d'autre part en mettant ledit espace sous vide à une pression comprise entre 1 et 0,01 mbar, de préférence 0,1 mbar, avant sa liaison avec le réservoir d'eau.

L'invention met à profit le fait que l'eau peut être libérée de gaz dissous de façon relativement simple par mise en dépression et réchauffage. De façon surprenante, l'effet qui apparaît est plus prononcé qu'un calcul global de la dilution le laisserait attendre. Apparemment, les molécules d'eau "chassent" les molécules d'hélium des surfaces organiques polluées.

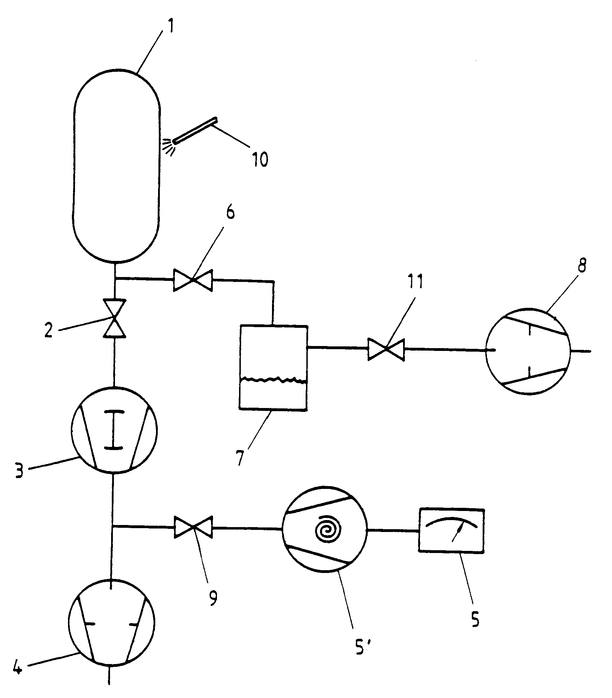

Dans la figure unique ci-annexée, on montre un récipient 1 qui est soumis à un test de détection de fuite à hélium selon le procédé de l'invention.
Par une vanne 2, le récipient 1 est relié à un ensemble de pompage à deux étages qui comprend par exemple une pompe moléculaire 3 et une pompe primaire mécanique 4. Un spectromètre de masse 5, qui détecte les atomes d'hélium de façon sélective, est relié à la liaison entre les deux pompes à travers une pompe spiromoléculaire 5′ et une vanne 9.
En outre, un réservoir d'eau 7 est relié au récipient de test 1 à travers une autre vanne 6, ce réservoir 7 étant partiellement rempli d'eau et l'espace situé au-dessus de la surface liquide pouvant être vidé par une pompe à vide auxiliaire 8 reliée à travers une vanne 11.

L'eau dans le réservoir d'eau 7 a été préalablement dégazée par mise en dépression et, le cas échéant, par réchauffage.

Avant le contrôle d'étanchéité proprement dit, le récipient de test 1 est pompé jusqu'à une pression de, par exemple, 0,1 mbar par les pompes 3 et 4. La pression dans le réservoir d'eau est en même temps réglé à une valeur fixe comprise entre 20 et 50 mbar à l'aide de la pompe à vide auxiliaire 8. Cette pression est définie par un chauffage électrique (non représenté) et une mesure de point de rosée. Puis, la soupape 6 est ouverte pour que de la vapeur d'eau puisse monter dans le récipient de test. Ainsi, la pression dans le récipient de test 1 s'élève momentanément par exemple à 23 mbar, mais redescend très vite quand les pompes 3 et 4 sont en fonctionnement. De cette façon, les atomes d'hélium, qui se trouvent toujours dans le récipient de test 1 ou dans les conduits ou soupapes, sont rapidement éliminés. Le cas échéant, il est avantageux de maintenir la liaison du réservoir d'eau, non pas pour une durée déterminée, mais jusqu'à ce que le bruit de fond d'hélium, mesuré simultanément dans le spectromètre de masse, descente au-dessous d'une valeur de seuil. Puis la vanne 6 est fermée et le récipient est balayé sur sa surface externe par un pistolet de projection d'hélium 10. Même des fuites minuscules, qui jusqu'à présent se confondaient avec le bruit de fond, sont maintenant détectés dans le spectromètre de masse 5.

L'invention n'est pas limitée au contrôle de récipients fermés tels que décrits ci-dessus, mais généralement applicable au contrôle d'étanchéité de composants, dans lesquels de l'hélium est projeté sur un côté et où il y a une détection d'hélium sur l'autre côté. De même, l'invention est applicable à un récipient fermé rempli de gaz traceur, qui est amené dans une cloche de test. Avant d'examiner la cloche pour détecter le gaz traceur, cette cloche est "rinçée" avec de la vapeur d'eau, comme décrit ci-dessus.

## Revendications

1. Procédé de contrôle de l'étanchéité d'un composant, en particulier d'un récipient de test, dans lequel un gaz traceur est envoyé sur la surface du composant, tandis que l'espace situé de l'autre côté de cette surface est mis sous vide et relié à un détecteur de fuite à gaz traceur, caractérisé en ce qu'avant le contrôle d'étanchéité proprement dit, ledit espace situé de l'autre côté de ladite surface du composant (1) est temporairement relié à un réservoir d'eau (7) dans lequel se trouve une eau dépourvue de gaz dissous, et d'autre part mis sous vide à une pression comprise entre 1 et 0,01 mbar, de préférence 0,1 mbar, avant sa liaison avec le réservoir d'eau (7).

2. Procédé selon la revendication 1, caractérisé en ce que en ce que l'eau dans le réservoir d'eau (7) est préalablement dégazée par mise sous vide et éventuellement réchauffage.

## Claims

1. A method for testing leak tightness of a component, in particular a test container, according to which a tracer gas is directed to one side of the component and the space on the other side is evacuated and connected to a tracer gas detector, characterized in that, prior to the actual leak testing, said space on said other side (1) on the one hand is temporarily connected to a water tank (7) containing water which is free from dissolved gases, and on the other hand and prior to being connected with the water tank (7), said space is evacuated to a pressure in the range of 1 mbar to 0,01 mbar, preferably 0,1 mbar.

2. A method according to claim 1, characterized in that the water in the water tank (7) is previously degassed by heating and possibly by evacuation.

## Patentansprüche

1. Verfahren zur Dichtheitsprüfung eines Bauteils, insbesondere eines Prüfbehälters, demgemäß ein Prüfgas auf eine Oberfläche des Bauteils geleitet wird und der Raum auf der anderen Seite evakuiert und an einen Prüfgasdetektor angeschlossen wird, dadurch gekennzeichnet, daß der Raum auf der genannten anderen Seite des Bauteils (1) einerseits vor der eigentlichen Dichtheitsprüfung vorübergehend mit einem Wasserbehälter (7) verbunden wird, in dem sich von gelösten Gasen befreites Wasser befindet, und andererseits vor der Verbindung mit dem Wasserbehälter (7) auf einen Druck zwischen 1 und 0,01 mbar, vorzugsweise 0,1 mbar evakuiert wird.

2. Verfahren nach Anspruch 1, dadurch gekennzeichnet, daß das Wasser im Wasserbehälter (7) vorher durch Evakuieren und ggfs. Erhitzen entgast wird.
